# EUROPEAN PATENT APPLICATION

(11) **EP 0 548 053 A2**
(43) Date of publication of application: **23.06.1993**
(21) Application number: 93104207.1
(22) Date of filing: 29.09.1989
(51) Int. Cl.: G01M 11/00, G01L 1/24, G01M 11/08

(54) **Optical fibre monitoring by micro- and macro-bending portions of the optical fibre**

(30) Priority: 07.12.1988 GB 8828505
(62) Divisional of application: 89309987.9
(71) Applicant: BICC Public Limited Company, London W1X 5FH (GB)
(72) Inventor: Handford, John, Chester CH2 4DD (GB); Myers, David Lister, Frodsham, Warrington (GB); Grigsby, Richard, Tarvin, Chester CH3 8JS (GB)
(74) Representative: Butcher, Ian James

(57) **Abstract**

A clip-on device for detecting whether or not an optical fibre F is carrying a light signal subjects a first portion of an optical fibre to microbending and detects any light escaping from the fibre as a result. The device comprises an anvil 2 having an undulating surface and a pulsed pressure pad 1, driven by a motor 10, for urging an optical fibre F against the undulating surface of the anvil so that a portion of the fibre is subjected to microbending of a gradually increasing extent. A second portion of the fibre is subjected to macrobending by a light guide 8 or 9, which macrobending is insufficient, by itself, to cause a substantial amount of light to escape from the fibre, but serves to concentrate the light caused to leak from the fibre by microbending of the first portion of the fibre. A control unit 13, operatively coupled to the photodetectors 6 and 7 associated with the light guides 8 and 9 and to the pressure pad 1 gives an output indication on receipt of a signal from the photodetector 6 or 7 that escaping light has been detected and, on receipt of such signal, stops the motor 10 so that the pressure pad 1 is stopped from further increasing the extent of microbending of the portion of the fibre.

## Description

This invention relates to the monitoring of optical fibres and is particularly concerned with apparatus for and a method of detecting whether or not an optical fibre is carrying a light signal.

An optical fibre comprises a core of material transparent to light, usually in the infra-red region. It is clad by a material of a refractive index lower than that of the material of the core so that light is constrained to travel down the fibre by reflection from the cladding. By modulating the light, that is altering its amplitude or other characteristics, signals may be transmitted down the fibre. These signals may be used for a variety of purposes, from television broadcasts to computer data transmission.

There is frequently a requirement to detect whether or not a fibre is in service. One reason for this might be the case where a multiplicity of optical fibres is installed at the same time, but only a small number used. If one of the fibres in use becomes damaged or degraded in some way, then it can be replaced by a fibre not in use. If the repair is to be carried out some way along the route, it is important to detect which fibres carry no traffic and are therefore available for use as spares.

It is an object of the present invention to provide improved apparatus for detecting whether or not an optical fibre is carrying a light signal, which improved apparatus can be used without causing undue disruption of the signal if one is present.

According to the invention, the improved apparatus comprises bending means for subjecting at least a portion of an optical fibre to microbending of a gradually increasing extent; first detecting means for detecting light escaping from the fibre; and, operatively coupled to the first detecting means and to the bending means, a control unit which will give an output indication on receipt of a signal from the first detecting means that light escaping from the fibre has been detected and which, on receipt of said signal, will stop the bending means from further increasing the extent of microbending of said portion of the fibre, the apparatus including second bending means for causing a second portion of an optical fibre to be subjected to macrobending to a predetermined fixed extent, the extent of macrobending being insufficient, by itself, to cause a substantial amount of light to escape from the fibre.

Preferably, the improved apparatus also includes second detecting means for detecting when the fibre has been subjected to a predetermined maximum amount of microbending, the arrangement being such that if the second detecting means detects that the fibre has been subjected to its predetermined maximum amount of microbending and no signal has been received from the first detecting means, a signal is sent to the control unit which stops the bending means from further increasing the amount of deformation of the fibre and gives a second output indication.

The improved apparatus of the invention makes use of the phenomena known as microbending, which is the escape of light through the cladding of an optical fibre due to deformation of the fibre. Microbending involves bending of the fibre through a radius of an order of magnitude similar to the radius of the fibre itself, normally at one or more than one discrete pressure point. This is in contrast to macrobending, which is bending of the fibre through a radius typically not less than ten times the radius of the fibre itself.

By virtue of the fact that, on receipt of a signal that light has been detected by the first detecting means, the control unit stops the bending means from further increasing the extent of microbending of the portion of the optical fibre, escape of most of the light from the optical fibre and consequential disruption of the signal transmitted along the fibre is limited. Furthermore, the predetermined maximum amount of microbending which is detected by the second bending means can be preset at a level at which the disruption to the signal transmitted along the fibre is at an acceptably low level.

Preferably, the bending means comprises an anvil having a face including one or more than one undulation and pressure applying means for urging the undulating face of the anvil and an optical fibre one against the other. Conveniently, the pressure applying means is adapted to apply pulses of pressure to urge the undulating face of the anvil and an optical fibre one against the other. In one convenient arrangement, the pressure applying means comprises a pressure member, the arrangement being such that the optical fibre is constrained between the pressure member and the undulating face of the anvil.

In the improved apparatus of the invention the first detecting means is preferably in the location of the second bending means.

Microbending of an optical fibre has the advantage that it is relatively insensitive to the wavelength of light transmitted along the fibre and to the fibre characteristics such as mode field radius and cut-off wavelength. Further, microbending does possess the disadvantage that the leaked light is relatively difficult to collect efficiently. The additional macrobending of an optical fibre, with the associated more predictable leakage, serves to facilitate light detection.

A second form of the apparatus for detecting whether or not an optical fibre comprising a core surrounded by cladding is carrying a light signal comprises bending means for subjecting an optical fibre over one or more than one first longitudinal region of the fibre to microbending of a gradually increasing extent such that the radius of curvature of the bend in the or each first longitudinal region is less than five times the thickness of the cladding of the fibre; first detecting means for detecting light escaping from the fibre; and, operatively coupled to the first detecting means and to the bending means, a control unit which will give an output indication on receipt of a signal from the first detecting means that light escaping from the fibre has been detected and which, on receipt of said signal, will stop the bending means from further increasing the extent of microbending of said one or more than one first longitudinal region of the fibre, the apparatus including second bending means for causing a further portion of an optical fibre to be subjected to macrobending to a predetermined fixed extent, which second bending means is adapted to bend the fibre over a second longitudinal region substantially longer than the or each first longitudinal region to such an extent that the radius of the bend in the second longitudinal region is at least ten times the thickness of the cladding of the fibre, the extent of macrobending in the second longitudinal region being insufficient, by itself, to cause a substantial amount of light to escape from the fibre and, preferably also, the first detecting means is in the location of the second bending means.

The second preferred form of improved apparatus preferably also includes second detecting means for detecting when one or more than one first longitudinal region of the fibre has been bent to a predetermined maximum extent, the arrangement being such that if the second detecting means detects that a first longitudinal region of the fibre has been bent to its predetermined maximum extent and no signal has been received from the first detecting means, a signal is sent to the control unit which stops the bending means from further increasing the amount of deformation of the or each first longitudinal region of the fibre and gives a second output indication.

The invention is further illustrated by a description, by way of example, of two preferred embodiments of the improved apparatus for detecting whether or not an optical fibre is carrying a light signal, with reference to the accompanying drawings, in which:-
Figure 1 shows a schematic diagram of the first preferred embodiment of the improved apparatus, and
Figure 2 shows a schematic diagram of the second preferred embodiment of the improved apparatus.

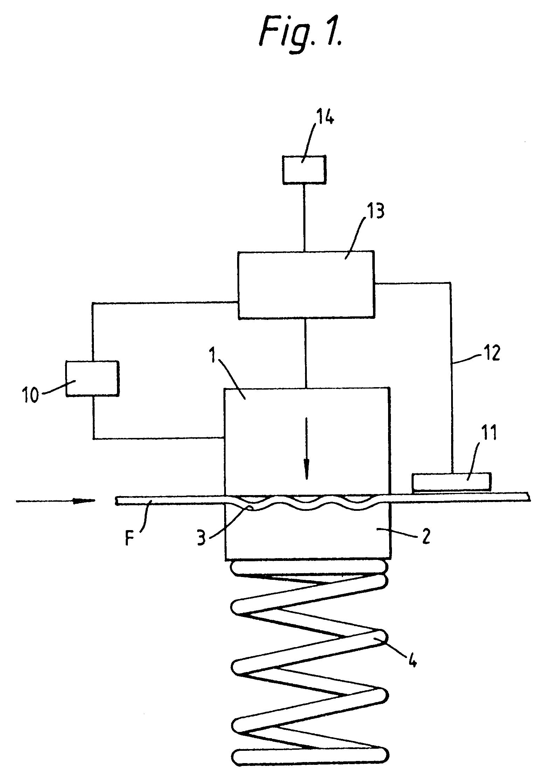

Referring to Figure 1, the first preferred embodiment of the improved apparatus comprises a movable pressure member 1 and an anvil 2 having an undulating face 3. The anvil 2 is biased towards the pressure member 1 by means of a spring 4, whilst the pressure member 1 is driven towards the anvil 2 by means of a motor 10. The motor 10 causes a pressure member 1 to be urged towards the anvil 2 in a pulsed movement, with pulses of gradually increasing amplitude. A photodetector 11 positioned immediately downstream of the anvil 2 is adapted to detect light escaping from an optical fibre, the photodetector being operatively coupled via a line 12 to a microprocessor 13, which is itself operatively coupled to the motor 10. The microprocessor 9 is also operatively coupled to a display unit 14.

In use, an optical fibre F is constrained between the movable pressure member 1 and the undulating face 3 of the anvil 2 and the motor 10 urges the pressure member 1 against the optical fibre which is itself urged against the undulating face 3 of the anvil 2 in a pulsed movement, with pulses of gradually increasing amplitude. If there is a light signal on the optical fibre F, the increasing amplitude of the pulses from the pressure member 1 will begin to disturb the transmission properties of the fibre, causing light to leak from the fibre into its cladding due to microbending. The light will begin to emerge from the cladding of the fibre F and escaping light will be detected by the photodetector 11 which sends a signal via line 12 to the microprocessor 13. The microprocessor 13 causes the motor 10 to stop the increase in the amplitude of the pressure pulses to the pressure member 1 and sends a corresponding signal to the display unit 14.

The microprocessor 13 also monitors the pressure pulses being applied to the optical fibre F by the pressure member 1. If a predetermined maximum amplitude is reached without a signal being received from the photodetector 11, the microprocessor 13 concludes that there is no light signal on the optical fibre F, and sends a corresponding alternative signal to the display unit 14.

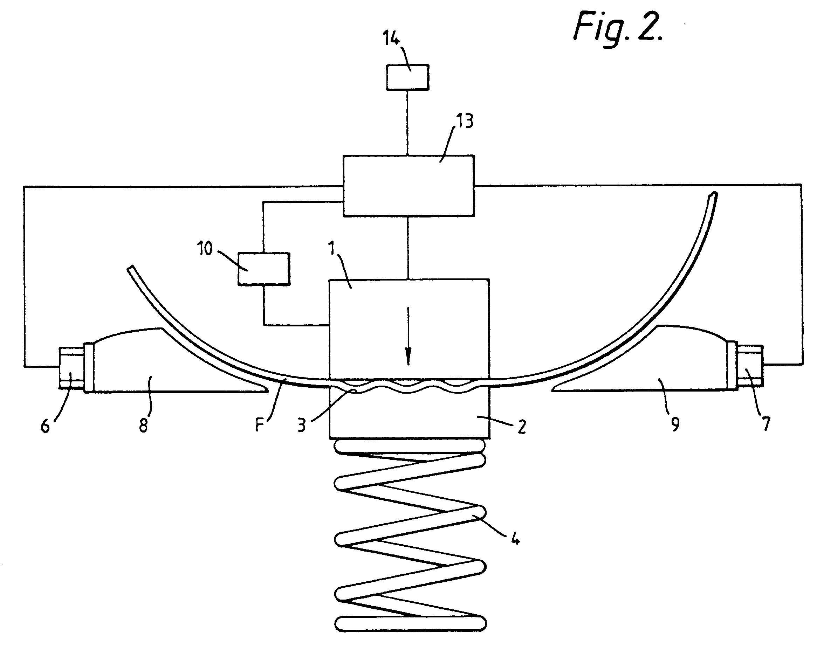

Referring to Figure 2, parts of the second preferred embodiment of the improved apparatus identical to corresponding parts of the first preferred embodiment are given the same reference numerals. The pressure applying mechanism of the second preferred embodiment is identical to that of the first embodiment, producing microbending of an optical fibre F so as to cause light carried thereby to leak into the cladding of the fibre. However, the second preferred embodiment also includes, on opposite sides of the pressure member 1 and anvil 2, light guides 8 and 9 each of such a shape that an optical fibre F bearing against a face of the light guide is subjected to macrobending. The light guide 8 is operatively coupled to the microprocessor 13 via a photodetector 6 and the light guide 9 is operatively coupled to the microprocessor by a photodetector 7.

The macrobends to which the optical fibre F is subjected by the light guides 8 and 9 in themselves are of sufficiently large radius that, without the microbending caused by the pressure member 1 and anvil 2, any light signal in the fibre would not be disrupted. However, if there is a light signal present in the optical fibre F the microbending caused by the pressure bending 1 and anvil 2 allows light out of the core into the cladding and this light is shed from the cladding over a short distance and on one side of the fibre due to the macrobending caused by the light guide 8 or 9. This more predictable escape of light can easily be detected by the photodetector 6 or 7 which sends a signal to the microprocessor 13 as before.

The provision of two light guides 8 and 9 for producing macrobends in an optical fibre F and two photodetectors 6 and 7 have the advantage that a light signal can be detected regardless of its direction of travel along the fibre.

## Claims

1. Apparatus for detecting whether or not an optical fibre (F) is carrying a light signal, which apparatus comprises bending means (1,2) for subjecting at least a portion of an optical fibre to microbending of a gradually increasing extent; first detecting means (6,7) for detecting light escaping from the fibre; and, operatively coupled to the first detecting means and to the bending means, a control unit (13) which will give an output indication on receipt of a signal from the first detecting means that light escaping from the fibre has been detected and which, on receipt of said signal, will stop the bending means from further increasing the extent of microbending of said portion of the fibre, the apparatus including second bending means (8,9) for causing a second portion of an optical fibre (F) to be subjected to macrobending to a predetermined fixed extent, the extent of macrobending being insufficient, by itself, to cause a substantial amount of light to escape from the fibre, and wherein the first detecting means is in the location of the second bending means.

2. Apparatus as claimed in Claim 1, wherein the apparatus also includes second detecting means (13) for detecting when the fibre has been subjected to a predetermined maximum amount of microbending, the arrangement being such that if the second detecting means detects that the fibre has been subjected to its predetermined maximum amount of microbending and no signal has been received from the first detecting means, a signal is sent to the control unit which stops the bending means from further increasing the amount of deformation of the fibre and gives a second output indication.

3. Apparatus as claimed in Claim 1 or 2, wherein the bending means comprises an anvil (2) having a face (3) including one or more than one undulation and pressure applying means (1) for urging the undulating face of the anvil and an optical fibre (F) one against the other.

4. Apparatus as claimed in Claim 3, wherein the pressure applying means (1) is adapted to apply pulses of pressure to urge the undulating face (3) of the anvil (2) and an optical fibre (F) one against the other.

5. Apparatus as claimed in claim 3 or 4, wherein the pressure applying means (1) comprises a pressure member, the arrangement being such that an optical fibre (F) can be constrained between the pressure member and the undulating face (3) of the anvil (2).

6. Apparatus for detecting whether or not an optical fibre (F) comprising a core surrounded by cladding is carrying a light signal, which apparatus comprises bending means (1,2) for subjecting one or more than one first longitudinal region of the fibre to microbending of a gradually increasing extent such that the radius of curvature of the bend in the or each first longitudinal region is less than five times the thickness of the cladding of the fibre; first detecting means (11;6,7) for detecting light escaping from the fibre; and, operatively coupled to the first detecting means and to the bending means, a control unit (13) which will give an output indication of a signal from the first detecting means that light escaping from the fibre has been detected and which, on receipt of said signal, will stop the bending means from further increasing the extent of microbending of the or each first longitudinal region of the fibre.

7. Apparatus as claimed in Claim 6, wherein the apparatus also includes second detecting means for detecti8ng when one or more than one first longitudinal region of the fibre has been bent to a predetermined maximum extent, the arrangement being such that if the second detecting means detects that the first longitudinal region of the fibre has been bent to its predetermined maximum extent and no signal has been received from the first detecting means, a signal is sent to the control unit which stops the bending means from further increasing the amount of deformation of the or each first longitudinal region of the fibre and gives a second output indication, the apparatus including second bending means (8,9) for causing a further portion of an optical fibre (F) to be subjected to macrobending to a predetermined fixed extent, which second bending means is adapted to bend the fibre over a second longitudinal region substantially longer than the or each first longitudinal region to such an extent that the radius of curvature of the bend in the second longitudinal region is at least ten times the thickness of the cladding of the fibre, the extent of macrobending in the second longitudinal region being insufficient, by itself, to cause a substantial amount of light to escape from the fibre, and wherein the first detecting means (6,7) is in the location of the second bending means (8,9).
